# EUROPEAN PATENT APPLICATION

(11) **EP 3 342 621 A1**
(43) Date of publication of application: **04.07.2018**
(21) Application number: 18150110.7
(22) Date of filing: 02.01.2018
(51) Int. Cl.: B60K 37/02, B60K 35/00

(54) **SELECTIVE LIGHTING FOR GRAPHICAL ELEMENTS OF A GAUGE**

(30) Priority: 02.01.2017 US 201715396799
(71) Applicant: Visteon Global Technologies, Inc., Van Buren Township, MI 48111-5711 (US)
(72) Inventor: VAN LAAK, Alexander, 52072 Aachen (DE); RODE, Andreas, 50171 Kerpen (DE); CITTADINI, Ruddy, 50823 Köln (DE); BELZL, Frederik, 50737 Köln (DE); PEREIRA, Manuel, 2900-514 Setubal (PT)
(74) Representative: Dummett Copp LLP

(57) **Abstract**

A method, system, and devices for implementing a selectively lighted instrument cluster are disclosed herein. The aspects employ a light mask layer (or collection of light mask layers) using a combination of light and dark materials to provide individually lit graphical elements on a cover layer (i.e. applique layer) of a gauge provided by a display assembly of a motor vehicle instrument cluster. The combination of light and dark layers selectively applied prevents light leakage into other non-intended portions on the viewable surface of the cover layer.

## Description

### BACKGROUND

Display assemblies provide information to a viewer through various techniques. In certain traditional implementations, the display assemblies were primarily mechanical, and provided information via mechanical gauges, pointers, and the like.

A common implementation of display assemblies is in vehicle instrument clusters The digital assemblies interact with a central processor, for example an electronic control unit (ECU), receive information, and provide an indication based on the received information. The received information may be related to information about the operation of the vehicle, for example, the speed, fuel levels, revolutions-per-minute (RPM), or the like.

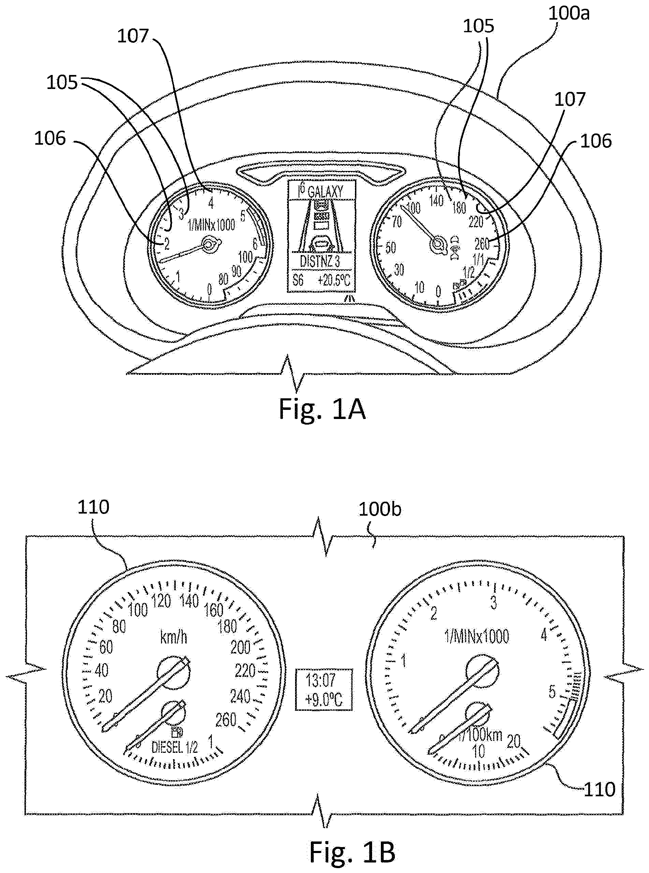

As shown in Figure 1A, which illustrates a prior art implementation of an instrument cluster 100a, an instrument cluster may include multiple gauges (for example speed and tachometers), graphical elements 105 associated with a scale in which a pointer points to indicate a sensed condition of the vehicle, and a variety of lighted and digital information. Commonly, each graphical element may be either a numerical symbol 106 or a graphical symbols such as tick marks 107 (also called "hatch marks") on a scale.

Figure 1B illustrates another implementation of an instrument cluster 100b. Additionally provided in the instrument cluster 100b is a ring 110 around the gauges. The ring 110 may be lit by lighted guides (i.e. light pipes) to provide secondary information. This prior art instrument cluster 100b highlights an attempt by a manufacturer to provide additional information through lighted guides to augment the already provided information to a viewer of the instrument cluster.

### SUMMARY

The following description relates to a display assembly for use in an instrument cluster of a motor vehicle, which provides selective lighting of individual graphical elements associated with a scale of a gauge. Additionally, methods are disclosed herein that provide new combinations of providing information to a viewer of the instrument cluster while a vehicle is in movement or operating.

According to the invention, there is provided a display assembly for a motor vehicle instrument cluster, comprising:
at least one gauge, the or each gauge comprising a cover layer, a pointer device rotatable around an axis, the pointer extending from a centre of the gauge to a portion of the gauge with a plurality of graphical elements;
at least one light mask layer comprises a plurality of light cells, each light cell corresponding with one of the plurality of graphical elements; and
a set of light emitting diodes (LEDs), with each LED corresponding individually to one of the plurality of light cells and one of the plurality of graphical elements.

The at least one light mask layer includes a plurality of light transmission cells, with each light transmission cell including an inner light reflective layer, an opaque lower layer or substrate, and an opening to allow light to propagate from one of the LEDs to a respective graphical element.

In another example of the display assembly, the display assembly comprises at least two light mask layers, wherein the plurality of graphical elements includes numerical symbols and tick mark symbols, with one of the at least two light mask layers corresponding to the numerical symbols, and the other of the at least two light mask layers corresponding to the tick mark symbols.

Each of the LEDs may be connected to an individual control circuit, with instructions to turn on the individual control circuit being sourced from a microprocessor coupled to a vehicle.

The, or each, light mask layer is preferably substantially disc-shaped. The plurality of light cells is then most advantageously arranged in an arcuate array of laterally adjacent cells around a peripheral edge of the mask layer. Each cell is optically isolated from an adjacent cell by at an axially extending wall between adjacent cells, this wall extending between a substantially planar component on which the LEDs are mounted and an underside of the cover layer.

There may be at least two of the light mask layers, including a radially inner light mask layer configured to illuminate a radially inner portion of the cover layer and a radially outer light mask layer configured to illuminate a radially outer portion of the cover layer.

In one embodiment of the invention, a light pipe ring is provided between the radially inner and radially outer light mask layers, the light pipe ring comprising at least one light inlet and for each light inlet a corresponding light outlet located on or above the cover layer. Each light inlet may be configured to receive light from a corresponding one of the cells of either the radially inner light mask layer or the radially outer light mask layer, whereby in use the, or each, light outlet of the light pipe ring is lit by a corresponding one of the LEDs.

In another example of the instrument cluster, the plurality of graphical elements includes numerical symbols and two types of tick mark symbols, the first type being minor tick marks spaced closer together than the second type which are major tick marks, with one of the light mask layers corresponds to the numerical symbols, and the other of the light mask layers corresponding to each type of the tick mark symbols, respectively.

In another example of the instrument cluster, the instrument cluster includes a second gauge, wherein the first gauge is employed as a speedometer, and the second gauge is employed for a tachometer, which each of the first gauge and the second gauge including respective light mask layers and a corresponding set of LEDs separately provided from the light mask layers.

In another example of the instrument cluster, the at least one light mask layer is ring shaped.

In another example of the instrument cluster, the LEDs in each set of LEDs are each individually controllable to provide at least two colours.

Also disclosed herein, is a light mask layer for insertion into an instrument cluster, including a plurality of light transmission cells; an outer layer of dark material for each of the plurality of light cells; an inner layer of light material for each of the plurality of light cells; and an opening to allow light to be propagated through for each of the plurality of light cells.

Also disclosed herein, is a method for implementing selective lighting of graphical elements on a cover layer of a gauge of a display assembly of an instrument cluster of a motor vehicle, including receiving a present reading from the vehicle; determining if a condition has been triggered based on the present reading from the vehicle; in response to the condition being triggered, selectively turning on a subset of the set of light emitting diodes (LEDs), so that light propagated from the selective LEDs is only seen through corresponding graphical elements on a cover layer of the display assembly.

The condition may be related to a cruise control selected amount. Numerical symbols or a specific tick mark symbol may then be lighted based on a pointer of the instrument cluster being at the selected cruise control amount.

The lighted portions may indicate that a tachometer pointer is an area non-optimal for a current gear setting of the vehicle.

The graphical elements may be configured to light up based on the pointer of a speedometer of the instrument cluster indicating that the present speed is over a received speed limit of the vehicle's present location.

The lighted portions may indicate a target acceleration speed.

The lighted portions may indicate a target de-acceleration speed.

Further objects, features and advantages of this invention will become readily apparent to persons skilled in the art after a review of the following description, with reference to the drawings and claims that are appended to and form a part of this specification.

### BRIEF DESCRIPTION OF THE DRAWINGS

The invention will now be further described, by way of example only, with reference to the accompanying drawings, in which:
Figures 1A and 1B illustrate examples of display assemblies of a motor vehicle instrument cluster according to a prior art implementation;
Figures 2A and 2B illustrate, respectively, a front perspective view and an exploded front perspective view of a motor vehicle instrument cluster having two display assemblies in a first preferred embodiment of the invention;
Figure 3 is a front side exploded view of the instrument cluster of Figure 2B, showing in more detail how each display assembly comprises between a front cover layer and a rear LED layer a number of substantially planar light mask layers, which when assembled within an outer retention ring, provide a light mask plate;
Figure 4 illustrates a schematic sectional view through a tick mark mask layer according to the exemplary embodiment, in the direction of line IV of Figure 5;
Figure 5 illustrates a top-view of the assembled light mask plate according to an exemplary embodiment;
Figure 6 illustrates a system-level implementation of the instrument cluster shown in Figure 2;
Figure 7 illustrates a method for implementing the microprocessor shown in Figure 6; and
Figures 8A, 8B and 8C illustrate examples of implementations of the instrument clusters discussed herein according to the exemplary embodiments.

### DETAILED DESCRIPTION

The invention is described more fully hereinafter with references to the accompanying drawings, in which exemplary embodiments of the invention are shown. This invention may, however, be embodied in many different forms and should not be construed as being limited to the embodiments set forth herein. Rather, these exemplary embodiments are provided so that this disclosure is thorough, and will fully convey the scope of the invention to those skilled in the art. It will be understood that for the purposes of this disclosure, the term "at least one of each" will be interpreted to mean any combination the enumerated elements following the respective language, including combination of multiples of the enumerated elements. For example, the term "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

Providing information via an instrument cluster through lighted and non-lighted techniques presents a viewer of the instrument cluster with a more dynamic experience. Lighting of gauges in motor vehicle instrument clusters is difficult due to size constraints, manufacturing limitations, and light leakage. Light leakage is defined as lighting being employed for a first portion of a gauge cover layer, but leaking out and illuminating into non-intended portions of a gauge cover layer.

As such, most implementers in providing selective lighting on an instrument cluster have pursued the technique shown in Figure 1B, which involves placing light guides out of the area associated with the graphical elements 105.

Disclosed herein are devices, systems, and methods for implementing selective lighting of graphical elements provided on a cover layer of a gauge of a display assembly for a motor vehicle instrument cluster. Employing the disclosed construction of a display assembly, various combinations of unique displays may be implemented (as discussed in greater detail below).

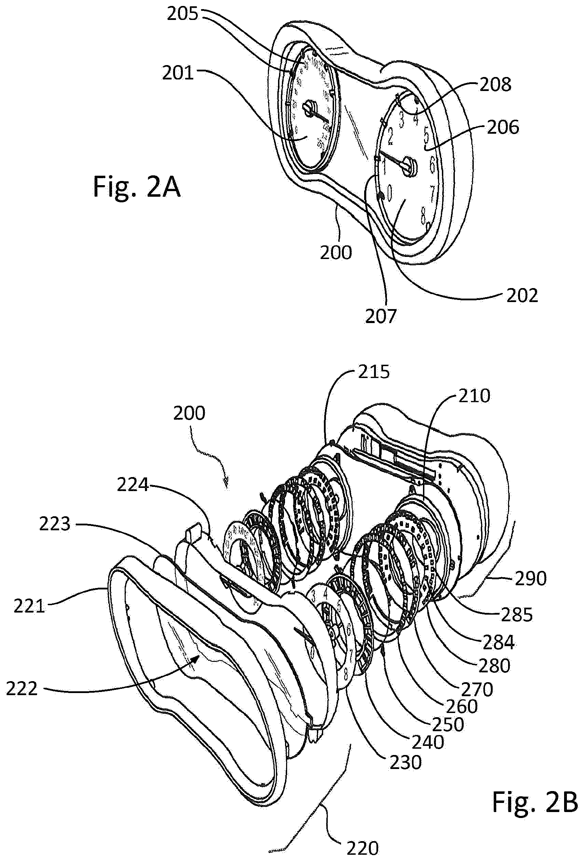

Figures 2A and 2B illustrate the instrument cluster 200 according to an exemplary embodiment, with Figure 2B illustrating an exploded view of the instrument cluster 200. In this example, the instrument cluster has two display assemblies, each assembly comprising a main gauge. One of the main gauges 201 is a speedometer, and the other 202 is a tachometer. The principles of the invention are, of course, applicable to instrument clusters having one display assembly or more than two display assemblies, and may be applied to more than one gauge in each assembly.

As shown in Figure 2B, the instrument cluster 200 comprises outer or forwardmost components 220 (i.e. the components directly facing the viewer), which are similar to those used in most instrument clusters and are not modified for the purposes of this invention. These components comprise a front bezel 221 surrounding a display opening 222 through which a user can view the display, a protective clear sheet, conventionally called a "lens" 223, through which the display is viewed, the lens being held between the bezel and an inner frame member 224 that also surrounds the display opening 222.

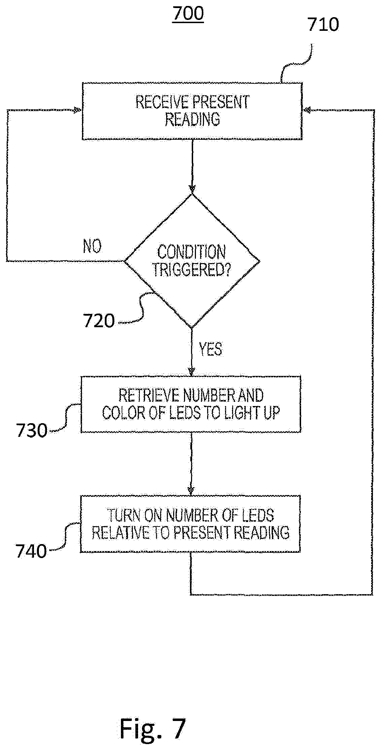

Additionally, the instrument cluster 200 comprises a rearward electronics portion 290 that is structurally conventional, but that is modified electronically for the purposes of the invention in ways that are not visible mechanically. A modified microprocessor 295 implemented within or separate to but operatively connected with the electronics portion 290 is provided to selectively control lighting of areal portions of the display. This microprocessor 295 will be described in greater detail below, and specifically in Figure 7.

Referring once again to Figure 2B, behind the outer components 220 of the instrument cluster are several substantially planar components 230, 240, 250, 260, 270, 280 that will be described in greater detail. Some of these components are shown as two circular rings, one for each circular gauge. These components are in the form of rings to provide space for other display elements within the rings. Other embodiments not shown may use disc-like components or part ring-like (i.e. arcuate) components, or other shapes based on the number and shape of the or each gauge.

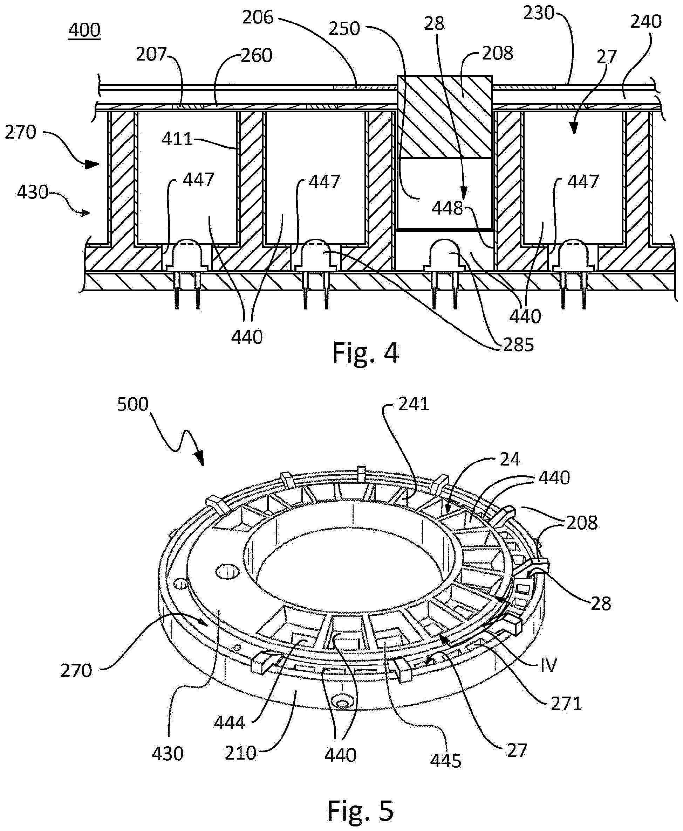

Rearward of the substantially planar components 230, 240, 250, 260, 270, 280, and forwards of the electronics portion 290, is a mounting plate 215 on which the forward components of each display assembly are held, within a corresponding retention ring 210 affixed to the mounting plate 215. The retention ring 210 is substantially cylindrical and provides an outer circumferential wall for a light mask plate 500 (Figure 5) to be explained in more detail below.

In the embodiment shown in Figure 2B, each display assembly has a forwardmost display portion that is employed to provide graphical elements 205, which comprise numerical symbols 206 and minor and major tick mark symbols 207, 208. This display portion may be referred to as the cover layer or applique layer and may comprise at least one sheet on which are provided graphical elements, and optionally also raised elements such as, for example, raised tick marks.

In this example, there are two, separate applique layers: a radially inner, sheet-like, applique layer provided by one of the substantially planar components 230 ("numbering dial applique"), which are provided the numerical symbols 206, and a radially outer, sheet-like, applique layer provided by another one of the substantially planar components 260 ("small tick marks dial applique") on which are provided the minor tick marks 207. The major tick marks 208 are provided by another one of the substantially planar components 250 ("raised tick marks light pipe").

Together, the numbering dial applique 230 and the small tick marks dial applique 260 provide a cover layer for the gauge.

In general, a graphical element may be an open aperture in the cover layer through which light is projected outwards towards the viewer, but may alternatively be a transparent (which term includes translucent) portion of the cover layer through which light preferentially escapes, or an aperture in which is seated a transparent feature. Such a transparent portion or feature is referred to as a lens element. The graphical elements on the gauge may therefore either be open or provided with a lens element, to allow light selectively to go through the cover layer when one or more of the LEDs on a substrate layer 280 are lit. The substrate layer 280 may be a circuit board.

This cover layer 230 has an opening for a pointer 232 to rotate around an axis. The explanation of how a pointer operates with a mechanical gauge based display assembly will be omitted, as such operation is known.

Two of the planar components 240, 270 explain are mask layers provided in the construction of the instrument cluster 200. Each mask layer provides a plurality of apertures or openings 24, 27, 28, each opening extending through each mask layer between the substrate layer 280 and the cover layer 230 and allowing light to pass from one subset of one or more LEDs through the mask layers 240, 270 towards only one areal portion of the cover layer (a schematic drawing illustrating the openings 24, 27, 28 is shown in Figure 4), and through the specific areal portion in order to selectively illuminate the graphical elements 205. As such, based on the LED group situated on the substrate layer 280, the graphical elements associated with each of the openings shown in the masks is selectively lit.

One mask layer 240 ("numerical mask layer") has a series of similar openings corresponding to the numerical symbols 206 shown on the gauge. These openings 24 are each in the form a channel with enclosed sides 241. The other mask layer 270 ("tick mark mask layer") has two types of openings, one type of which 27 is in the form of a channel with enclosed sides 271, each channel corresponding to each of the minor or granular tick marks 207, and the other type of which 28 is in the form of a groove (i.e. a channel with one open side) each one of which corresponds with the major, or coarse, tick marks 208. The major tick marks 208 are interspersed amongst the minor tick marks such that the major tick marks demark every predefined number (for example, every four marks) of minor tick marks 207.

Also shown in the construction of the instrument cluster 200 is a ring-like component 250 ("major tick mark ring"), formed in a transparent (which term includes translucent) material. This component has a main ring portion 251 around which is spaced a number of projections 252. Each projection 252 extends radially outwards and also forwards (towards the viewer). the outer surface of each projection facing the viewer of the display is coated by means of physical vapour deposition (PVD) to provide a metallic appearance, whilst still allowing back-light illumination to escape from the ring, which therefore acts as a light pipe. The projections provide raised major tick marks that jut out above the level of the surrounding minor tick applique layer 260. Features such as this may, in general, be used to provide graphical elements with depth. The inclusion of the major tick mark ring 250 is optional, and major tick marks may alternatively be provided by an applique layer in the same manner as the minor tick marks, the difference being just in the size or shape of the displayed graphical element.

The major tick mark ring 250, which is optional in the context of the present invention, is provided between the numerical mark layer 240 and the tick mark mask layer 270. The projections 252 each slot into a corresponding one of the axially extending grooves 28 on a cylindrical inner surface 272 of the tick mark mask layer 270. Each groove extending fully through the axial thickness of the tick mark mask layer, and each projection 252 is illuminated inside the groove 28 from underneath by a corresponding LED. The material of the major tick mark ring 250 therefore acts as a light pipe to individually convey illumination from each of the corresponding LEDs to the projections. Each projection also provides a lens (i.e. a transparent or translucent window or feature) for each one of the major tick marks 208.

The tick mark applique layer 260 is shaped to extend around and beneath the projections 252, so that the projections are features raised above the surrounding area 260 of the cover layers 230, 260. These raised features are individually illuminated by the corresponding groove openings 28.

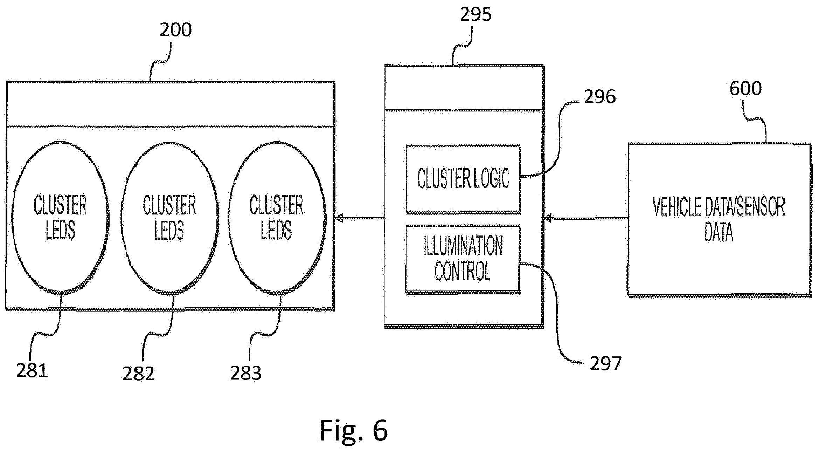

The substrate layer 280 is an electronic board that situates each of the LEDs. There may be an LED corresponding individually to each opening 24, 27, 28 through the mask layers 240, 270. As such, each LED on the substrate layer 280 may be individually controlled based on an operation of the vehicle, or a detection of the operation of the vehicle translated to a specific illumination pattern (the operation of which will be described in greater detail below with Figure 6).

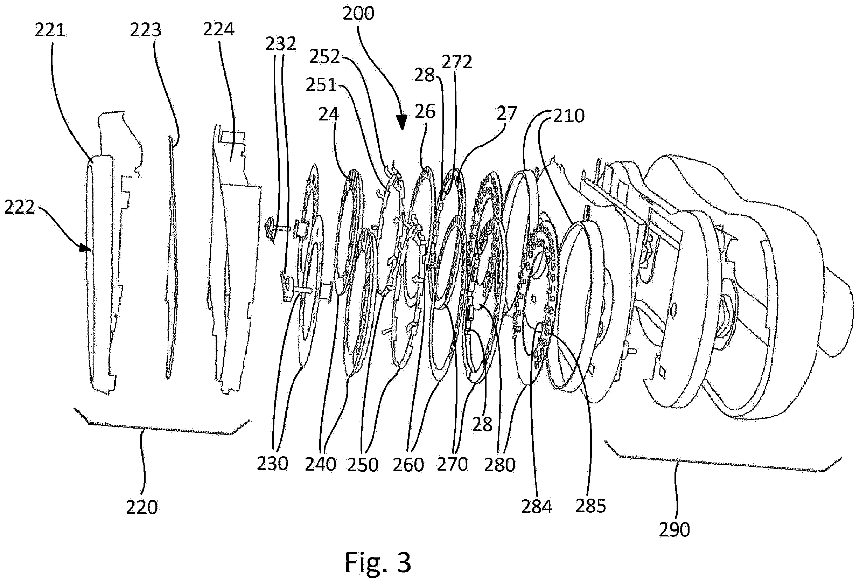

Figure 3 illustrates a side exploded-view of the instrument cluster 200 according to an exemplary embodiment. As shown in Figure 3, each of the mask layers 240, 270 form a ring shape, and when assembled together provide a composite ring-shaped layer disposed within the construction of the instrument cluster 200.

Figure 4 illustrates schematically a sectional view through part of the tick mark mask layer 270 along line "IV" indicated in Figure 5, which shows a top-view of the substantially planar components 240, 250, 270, 280 when assembled together. The view of Figure 5 omits the two applique layers 230, 260 in order to show low light reaches the applique layers from beneath. The cross section view of Figure 4 includes the two applique layers 230, 260, which sit directly on top of the corresponding mask layers 240, 270. Although a cross section is not shown through the numerical mask layer 240, this uses the same principles as the tick mark mask layer 270.

Each opening 24, 27, 28 surrounds an individually lit light transmission cell, (also referred to as a light box) 440. Each light transmission cell 440 includes at least one axially extending wall 430 with an adjacent cell 440 formed in an opaque material to prevent light transmission between adjacent cells. An inner layer 411 of the light transmission cell 440 is painted with a light reflective (which term, in this specification, includes diffuse light reflection, or scattering) material 440, for example a white, diffuse reflecting paint. Also provided on a lower side of each mask layer is a light inlet 444, 447, 448 to each opening 24, 27, 28 to allow light from each individual LED to shine through the mask layers 240, 260, 270. In this example, each LED extends upwards towards a corresponding inlet opening 444, 447, 448 when the mask layers and LED board 280 are assembled against the mounting plate 215.

Conventional light boxes typically provide area back-illumination over a broad non-selective area of a back-lit display. Because these provide broad area illumination, light leakage is not a significant and so these merely employ materials that are reflective or white. By employing the combination of dark substrate material with a reflective surface coating, as shown, the reflectivity of each light cell 440 is increased, while decreasing light leakage to other adjacent light cells 440.

As shown in Figure 5, each of the mask layers 240, 260 and 270 may be provided as a stand-alone ring-like or annular component, separate from the others (or a combination of two or more annular components depending on the number of gauges implemented), and does not require other components in order to direct light from each LED to the cover layer 230.

The light cells 440 of each mask layer 240, 260, 270 are arranged in a side-by-side array, extending along a line or curve that matches the arrangement of the graphical elements on the cover layer. In this example, this is an arcuate shape. As shown in Figure 5, the mask layer 240 for the numerical symbols 206 is nested within the two mask layers 260, 270 for the tick mark elements 207, 208, which are in turn held within the retention ring 210. The ring-like component 250 providing the raised major tick mark elements 251 sits on top of the assembled mask layer 240, 260, 270 and retention ring 210.

Figure 6 is a block schematic circuit diagram showing how a microprocessor 295 is used to control the operation of the LEDs. Each of the layers is associated with a specific set of LEDs 281, 282, and 283 (each corresponding to the layers 240, 260, and 270 shown above). A first set 281 is used to illuminate the numerical symbols 206, a second set 282 is used to illuminate the minor tick marks 207, and a third set 283 is used to illuminate the major tick marks 208.

While three layers and three sets of LEDs 281, 282, 283 are shown for exemplary purposes, the number may be varied according to the aspects disclosed herein.

The microprocessor 295 may be situated anywhere in the cabin portion of layers 290 shown in Figures 2B and 3, or alternatively, may be situated outside and electrically connected to the various sets of LEDs.

The sets of LEDs 281, 282, 283 are each composed of subsets of LEDs, referred to hereinafter as "LED groups". Each LED group comprises at least one LED. The LED groups of each set are arranged in an arc-shaped cluster and with each LED group individually controllable by the microprocessor 295 via an illumination control generation circuit 297. The illumination control generation circuit 297 is a collection of switches configured to control individually each of subsets of LEDs within each of the LED groups. For example, the illumination control generation circuit 297 may receive a command to switch on a specific subset or subsets of LEDs (LED set X), and accordingly, creates an electrical connection from a power source individually to the specific LED set X.

The first set of LEDs 281 corresponds to layer 240, and is turned on when it is desired to illuminate one or more of the numerical symbols. The second set of LEDs 282 corresponds to layer 260, and turns on when one or more of the first level, or minor, tick marks 207 are to be turned on, and similarly, the third set of LEDs 283 corresponds to layer 270, and turns on when one or more of the second level, or major, of tick marks 208 are to be turned on.

The individual LEDs used in any of the LED sets 281, 282, 283 may be a single colour, or alternatively be LEDs capable of providing multiple colours, such as red, green and blue.

In this example, in each of the two side-by-side display assemblies, the LED sets 281, 282, 283 are mounted in two concentric, arcuate bands on the ring-shaped substrate or circuit board 290. An inner band 284 has one LED for each one of the numerical symbols 206 on the cover layer 230, and an outer band 285 has one LED for each one of the minor and major ticks 207, 208 on the cover layer 230. The second and third LED sets 281, 282 are therefore interleaved in the outer band of LEDs.

The microprocessor 295 is configured with cluster logic 296, an implementation of which is shown in Figure 7. Figure 7 illustrates a method 700 for implementing the cluster logic 296 according to an exemplary embodiment described herein.

In operation, a present reading of a vehicle operating parameter is received 710. The present reading may be received from vehicle data, for example vehicle sensor data 600 from a vehicle operating condition sensor (not illustrated), and meant to be displayed via the instrument cluster 200 via a digital display or an analog display implemented with one of the gauges.

The present reading may be associated with the speed of the vehicle, a tachometer reading of the engine speed, or other vehicle operating parameter.

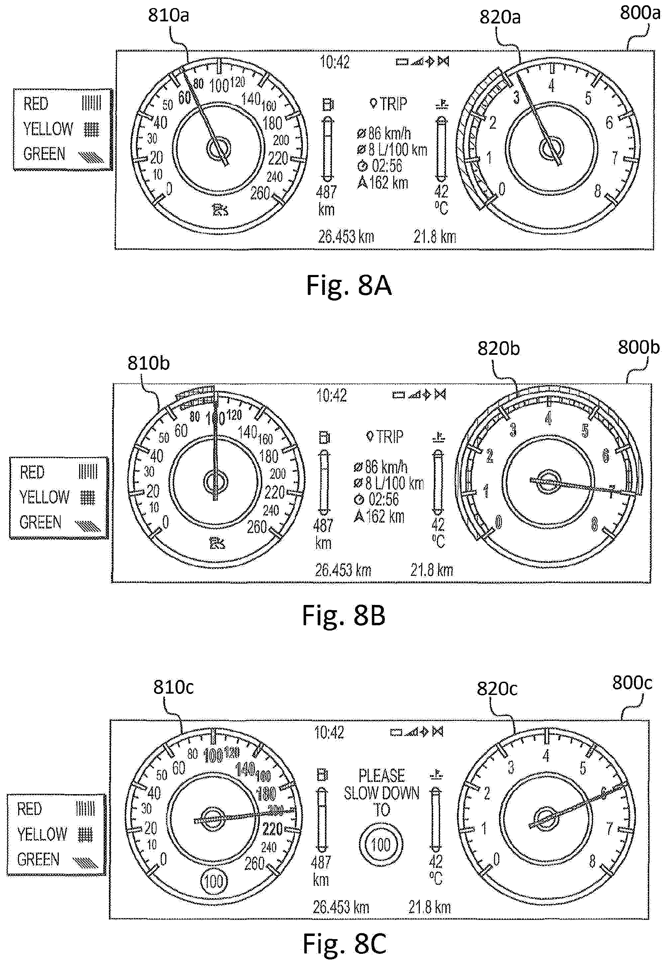

In operation, a determination is made 720 by the microprocessor 295 as to whether a condition is triggered. Various conditions may be implemented, with the various conditions listed herein being provided individually or collectively. Figures 8A, 8B and 8C illustrate various example use cases of this determination implemented with the instrument cluster 200.

In the most basic case, a determination of where the gauge pointer 232 is relative to the numerical symbols (layer 240), small ticks (layer 260), or larger ticks (270) may instigate a number or group of cluster LEDs 281, 282, 283 to light up. Once the number of LEDs is retrieved (operation 730), the individual LEDs are lit up 740. After this, the method 700 may return to the first operation 710 to iteratively perform the method 700.

In the example above, the number of LEDs turned on may be a predefined number around the present location of the pointer, with the predefined number being less than the total number of LEDs available. The end result is that when each of the LEDs is turned on, light propagates through the corresponding aligned opening 24, 26 towards the cover layer 230 to illuminate the corresponding graphical element to present lighted information to the viewer.

Other conditions associated with the determination of whether the condition has been triggered 720 may include any of the following:
1) speed limitation based on a detected or provided speed limits;
2) a notification of a gear shift;
3) an indication of a set cruise control position;
4) a detection of automatic start/stop status;
5) an indication of ECO driving/consumption;
6) an indication of the vehicle being in sports mode;
7) if the vehicle is in an autonomous mode, indicating future speeds associated with autonomous driving (i.e., show which speeds the vehicle is accelerating to or braking to); and
8) using a forward detecting camera or other detecting device to detect the vehicle in front or around you, and presenting said information as a colour.

Figures 8A, 8B and 8C illustrate example implementations of the aspects disclosed herein with three views of different types of instrument cluster 800a, 800b, 800c, in three different operational states. The instrument clusters 800a, 800b, 800c each include a speedometer 810a, 810b, 800c and a tachometer 820a, 820b, 820c that employ a mechanical instrument cluster components similar to those shown in Figures 2A, 2B, and 3.

In Figure 8A, the speedometer 810a has a pointer at a speed of approximately 70 km per hour (km/h). Additionally, the tick mark at 70 km/h is lighted green to indicate a set cruise control speed. The pointer is therefore at for the indicated cruise control speed.

The tachometer 820a also displays an annular band of green, extending from zero up to the tick mark below the current indicated engine speed, showing that the RPM is in an optimal zone. The colour may change to either yellow (indicating that the RPM value is approaching a non-optimal zone), or red (a danger zone) if the engine speed increases sufficiently high.

This is highlighted in Figure 8B. A shown, the speedometer 810b pointer is indicating a speed value in excess of the green zone as depicted in Figure 8A, and as such, the tick mark LEDs are lighted indicating that a value over the set cruise control speed is currently being realized. Similarly, the tachometer 820b indicates red selectively on tick marks from 0 to 7, indicating that the engine is currently at an engine speed above the optimal range.

In the above two implementations, the arcuate bands are generated using the same principles as described above. Light masks with adjacent, optically isolated cells and individually controllable LEDs, such as those described above, are provided beneath portions of the display to be individually lit.

Figure 8C illustrates another implementation, which uses the arrangement of LEDs 284, 285, light mask layers 240, 270, major tick mark ring 250 and inner 230 and outer 260 applique layers described above. As shown, the vehicle speed is above an indicated speed limit of 100 km/h. Speed numerical values between the indicated speed limit and the actual vehicle speed are illuminated red to indicate this vehicle overspeed on the speedometer 810c. Additionally, the engine speed numerical values on the tachometer 820c between a lower safe engine speed (5,000 RPM, in this example) up to the actual engine speed (7,000 RPM, in this example) are illuminated yellow to indicate this engine overspeed. This may serve as an indication that a shifting point is necessitated or optimally entered into (via a gear shifting mechanism).

As a person skilled in the art will readily appreciate, the above description is meant as an illustration of implementation of the principles of this invention. This description is not intended to limit the scope or application of this invention in that the invention is susceptible to modification, variation and change, without departing from the scope of this invention, as defined in the following claims.

## Claims

1. A display assembly for a motor vehicle instrument cluster, comprising:
at least one gauge, the or each gauge comprising a cover layer, a pointer device rotatable around an axis, the pointer extending from a centre of the gauge to a portion of the gauge with a plurality of graphical elements;
at least one light mask layer comprises a plurality of light cells, each light cell corresponding with one of the plurality of graphical elements; and
a set of light emitting diodes (LEDs), with each LED corresponding individually to one of the plurality of light cells and one of the plurality of graphical elements.

2. The display assembly according to claim 1, in which each light cell comprises an axially extending open light channel with at least one light reflective inner wall surface to allow light to propagate from one of the LEDs to a respective one of the graphical elements.

3. The display assembly according to claim 1 or claim 2, further comprising at least two light mask layers, in which the plurality of graphical elements includes numerical symbols and tick mark symbols, with one of the at least two light mask layers corresponding to the numerical symbols, and the other of the at least two light mask layers corresponding to the tick mark symbols.

4. The instrument cluster according to any preceding claim, in which said light mask layer is substantially disc-shaped, and the plurality of light cells is arranged in an arcuate array of laterally adjacent cells around a peripheral edge of said mask layer, each cell being optically isolated from an adjacent cell by at an axially extending wall between said adjacent cells, said wall extending between a substantially planar component on which said LEDs are mounted and an underside of said cover layer.

5. The instrument cluster according to any preceding claim, in which there are at least two of said light mask layers, including a radially inner light mask layer configured to illuminate a radially inner portion of said cover layer and a radially outer light mask layer configured to illuminate a radially outer portion of said cover layer.

6. The instrument cluster according to claim 5, in which a light pipe ring is provided between the radially inner and radially outer light mask layers, the light pipe ring comprising at least one light inlet and for each light inlet a corresponding light outlet located on or above said cover layer, and each light inlet is configured to receive light from a corresponding one of said cells of either the radially inner light mask layer or the radially outer light mask layer, whereby in use the, or each, light outlet of the light pipe ring is lit by a corresponding one of said LEDs.

7. The display assembly according to any preceding claim, in which the plurality of graphical elements includes numerical symbols and two types of tick mark symbols, a first one of said types being spaced closer together than a second one of said types, with one of the light mask layers corresponding to the numerical symbols, and the other light mask layer comprising cells corresponding to each type of the tick mark symbols, respectively.

8. The display assembly according to any preceding claim, in which the at least one light mask layer is ring shaped.

9. The display assembly according to any preceding claim, in which the cluster of LEDs is each individually lighted with at least two colours.

10. A light mask layer for insertion into a display assembly, comprising: a plurality of light cells; an outer layer of dark material for each of the plurality of light cells; an inner layer of light material for each of the plurality of light celles; and an opening to allow light to be propagated through for each of the plurality of light cells.

11. The light mask layer according to claim 10, in which the light mask layer is ring shaped.

12. The light mask layer according to claim 11, in which the openings each correspond with graphical elements of an instrument cluster.

13. The light mask layer according to claim 12, in which the graphical elements comprise numerical symbols and/or tick mark symbols.

14. A method for implementing selective lighting of graphical elements for an instrument cluster, comprising: receiving a present reading from a vehicle; determining if a condition has been triggered based on the present reading from the vehicle; in response to the condition being triggered, selectively turning on a subset of a cluster of light emitting diodes (LEDs), so that light propagated from the selective LEDs is only seen through corresponding graphical elements on a cover layer of the instrument cluster.
